# EUROPÄISCHE PATENTSCHRIFT

(11) **EP 0 524 200 B1**
(45) Veröffentlichungstag und Bekanntmachung des Hinweises auf die Patenterteilung: **03.08.1994**
(21) Anmeldenummer: 91905789.3
(22) Anmeldetag: 18.03.1991
(51) Int. Cl.: H04Q 7/04

(54) **SCHALTUNGSANORDNUNG FÜR AUS VERMITTLUNGSSTELLEN BESTEHENDE FERNMELDEWÄHLNETZE, VORZUGSWEISE FERNSPRECHWÄHLNETZE**
CIRCUIT ARRANGEMENT FOR TELECOMMUNICATION SWITCHING NETWORKS, PREFERABLY TELEPHONE SWITCHING NETWORKS, CONSISTING OF EXCHANGES
AGENCEMENT DE CIRCUIT RESEAUX AUTOMATIQUES DE TELECOMMUNICATIONS, DE PREFERENCE DES RESEAUX TELEPHONIQUES AUTOMATIQUES, CONSTITUES DE CENTRAUX

(30) Priorität: 19.03.1990 DE 4008790
(43) Veröffentlichungstag der Anmeldung: 27.01.1993
(73) Patentinhaber: PEITZ GmbH, 80686 München (DE)
(72) Erfinder: Peitz, Albert, W-8000 München 21 (DE)
(74) Vertreter: Bardehle, Heinz, Dipl.-Ing.
(86) Internationale Anmeldenummer: EP9100521
(87) Internationale Veröffentlichungsnummer: WO9115087

(56) Entgegenhaltungen:
- EP-A- 0 201 126
- EP-A- 0 310 705
- GB-A- 2 229 895

## Beschreibung

Die Erfindung bezieht sich auf eine Schaltungsanordnung für Fernmeldewählnetze, vorzugsweise Fernsprechwählnetze, mit mindestens einer Vermittlungsstelle, zu der mobile Teilnehmer über Funkwege und stationäre über Kabelwege Zugang haben.

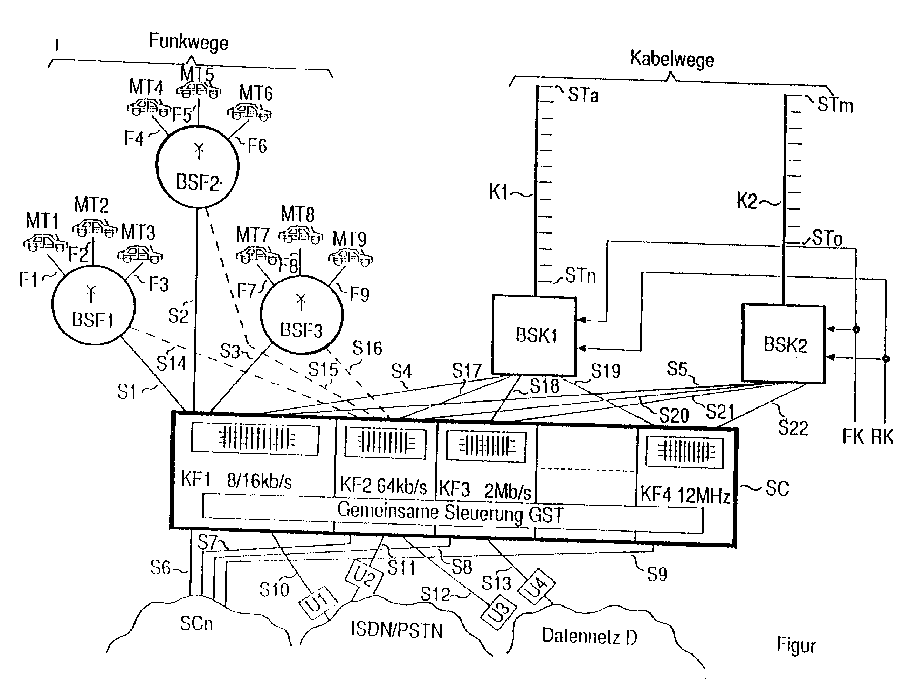

Eine als mobiles Kommunikationssystem bezeichnete Schaltungsanordnung ist in der von der Siemens AG herausgegebenen Druckschrift "D 900 Digitil Mobil Communication System" beschrieben und insbesondere in Figur 1.1 dargestellt. Dieses System ist zur Verwendung in verschiedenen Ländern, unter anderem der Bundesrepublik Deutschland, vorgesehen.

In der EP-A-0201126 wird unter Bezugnahme auf das heutige "ISDN-Dienstintegrierte Digitalnetz" ein Verfahren beschrieben, bei dem ISDN-Dienste auch in einem Funkübertragungssystem bereitgestellt werden können, bei dem im Gegensatz zu den Teilnehmerendgeräten im ISDN nicht jedem möglichen Benutzer die maximale Übertragungsrate bereitgestellt wird, weil dies bei den begrenzt verfügbaren Funkfrequenzspektren zu unwirtschaftlich und bei größerer Teilnehmerzahl gar nicht realisierbar wäre. Dies geschieht dadurch, daß für das Betreiben von unterschiedlichen Arten von Teilnehmerendgeräten (TGAx) und verschiedenen Diensten (Dy) im Funkübertragungssystem in jedem Teilnehmergerät (TG) nur diejenigen Funktionen realisiert sind, - und hierzu jedes Teilnehmergerät (TG) zum Empfang und zur Auswertung eines über den Funkübertragungskanal übertragenen Organisationsdatenstrom ausgestattet ist - in dem die Meldungen TGAx und Dy enthalten sind und von der ortsfesten Funkstelle BS ausgesendet werden. Die Druckschrift befaßt sich also mit einem Verfahren zur besseren Frequenz-Ökonomie in zellularen Funknetzen und weist damit indirekt darauf hin, daß die heutigen stationären terrestrischen Netze, vor allem das ISDN, im Teilnehmeranschlußnetz außerst unwirtschaftlich sind.

Es ist weiterhin in der EP-A-0310705 ein Funkübertragungssystem für die Übertragung von Kommunikationsdiensten, wie z.B. Sprach-, Text-, Bild- oder Fernmeßübertragung für den Einsatz bei fahrweggebundenen Verkehrsmitteln beschrieben, das mit einer gerichteten Mikrowellenübertragung arbeitet. Dieses System ist zumindest teilweise als dienstintegriertes System (ISDN) aufgebaut. Insofern ist dieses System mit dem in der EP-A-0210126 offenbarten vergleichbar. Dem Funkübertragungssystem gemäß der EP-A-0310705 liegt die Aufgabe zugrunde, den Informationsaustausch zwischen fahrweggebundenen Verkehrsmitteln und einer Zentrale auf einfache Weise zu ermöglichen. Dabei wird jedoch auf die Bedienung stationärer Teilnehmer von einer für mobile und stationäre Teilnehmer gemeinsamen Vermittlungsstelle nicht eingegangen.

Der Erfindung liegt die Aufgabe zugrunde, ein Fernmeldewählnetz zu schaffen, in dem das üblicherweise als stationäres Netz bezeichnete Fernmeldewählnetz (mit individuellen Teilnehmerleitungen zu den Vermittlungsstellen des Netzes) mit einem mobilen Kommunikationssystem auf der Basis einer einheitlichen Netzstruktur vereinigt wird, wobei außerdem der Leitungsaufwand für den Zugang zu den Vermittlungsstellen verringert werden soll.

Erfindungsgemäß geschieht dies durch die im Patentanspruch 1 angegebenen Merkmale.

Die mobilen und die stationären Teilnehmer sind bei dieser Netzgestaltung in funktionell gleicher Weise an ein einheitliches Fernmeldewählnetz angeschlossen, in dem alle Teilnehmer nur noch personenbezogene Netzzugänge haben, da die in bekannten stationären Netzen üblichen individuellen Teilnehmerleitungen entfallen. Aufgrund des für alle Teilnehmer geltenden personenbezogenen Netzzuganges ergibt sich funktionell für den jeweiligen Teilnehmer kein Unterschied, ob er sein Endgerät stationär, z.B. in einem Haus, oder mobil, z.B. in einem Kraftfahrzeug, verwendet. Er ist über seine individuelle Kennung mit diesem Endgerät an jedem beliebigen Ort des gesamten Fernmeldewählnetzes erreichbar und kann auch von jedem beliebigen Ort Verbindungen aufbauen, wobei ihn jeweils ein Kommunikationskanalpaar zugeteilt wird, und zwar im Falle des mobilen Einsatzes über Funk und im Falle des Einsatzes in einem Haus über das in das Haus geführte Breitbandkabel.

Das derzeit in den westeuropäischen Ländern vorgesehene mobile Kommunikationssystem arbeitet auf der Basis einer Bitrate von 8 oder 16 kb/s (Kilobit/Sekunde) je Sprachkanal. Demgegenüber erfordert das daneben existierende stationäre Fernsprechwählnetz, das ISDN-Netz, eine Bitrate von 64 kb/s. Dies macht beim Übergang vom mobilen Kommunikationssystem in das stationäre Netz bzw. umgekehrt den Einsatz von Umkodierungsgeräten erforderlich. In dem einheitlichen Fernmeldewählnetz gemäß der Erfindung sind derartige Umkodierungsgeräte nicht nötig, weil in einem solchen einheitlichen Netz mit einer einheitlichen Bitrate gearbeitet werden kann.

Das bekannte mobile Kommunikationssystem besitzt gegenüber dem üblichen stationären Fernmeldewählnetz den Vorteil, daß im mobilen Netz nur so viele Kommunikationskanalpaare zur Verfügung zu stellen sind, wie es das maximal zu erwartende Verkehrsvolumen erfordert. Demgegenüber ist das übliche stationäre Netz mit individuellen Teilnehmerleitungen ausgestattet. Diese große Zahl individueller Teilnehmerleitungen entfällt bei dem erfindungsgemäßen einheitlichen Netz, da auch für den Bereich der stationär betriebenen Teilnehmer nur so viele Kommunikationskanalpaare zur Verfügung zu stellen sind, wie das im jeweiligen Bereich zu erwartende Verkehrsvolumen es erfordert. Auf diese Weise wird also der bisher erforderliche Leitungsaufwand und Aufwand an teilnehmerindividuellen Anschlußschaltungen in den Vermittlungsstellen erheblich verringert.

Aufgrund der Verwendung von Breitbandkabeln für den Zugang der Teilnehmer zu den Vermittlungsstellen läßt sich durch Einsatz von Zwischen verstärkern, die ohne weiteres sämtliche über das Breitbandkabel übertragenen Informationen der Kommunikationskanalpaare verstärken, ein praktisch beliebig großer Einzugsbereich für eine Vermittlungsstelle erzielen. Da nun bei dem zugrundegelegten einheitlichen Fernmeldewählnetz die in einem Breitbandkabel unterzubringende Kapazität an Kommunikationskanalpaaren nicht wie beim üblichen stationären Netz von der Anzahl der Teilnehmer mit ihren individuellen Teilnehmerleitungen abhängt, sondern von der durch das Verkehrsvolumen bestimmten Anzahl von Kornmunikationskanalpaaren, ist es möglich, über ein mit Zwischenverstärkern ausgestattetes Breitbandkabel eine besonders große Zahl von stationären Teilnehmern zu erfassen, da die Verwendung des Breitbandkabels mit seinen Zwischenverstärkern Reichweitenprobleme beseitigt. Demgegenüber ergibt sich in den üblichen Netzen mit individueller Teilnehmerleitung ein Reichweitenproblem um so mehr, je größer der Bit-Bedarf des jeweils verwendeten Prinzips der Vermittlungstechnik ist. Dieser Bit-Bedarf ist bei dem in der Bundesrepublik Deutschland zunehmend angewendeten ISDN-System 144 kb/s, was zu einer maximalen Reichweite einer individuellen Teilnehmerleitung, bestehend aus einem Kupferadernpaar, von nur ca. 4 km führt. Individuelle Zwischenverstärker scheiden bei dieser Technik wegen des damit verbunden enormen Aufwandes von vorneherein aus. Die Folge davon ist, daß aufgrund der Verwendung von Breitbandkabeln in dem erfindungsgemäßen Fernmeldewählnetz eine viel größere Anzahl von stationären Teilnehmern von einer Vermittlungsstelle bedient werden kann, als dies bei einem Netz mit individuellen Teilnehmerleitungen möglich ist. Die Anzahl der von einer Vermittlungsstelle bedienbaren Teilnehmer bei dem erfindungsgemäßen Fernmeldewählnetz wird dann nur durch das von einer Vermittlungsstelle vernünftigerweise bewältigbare Verkehrvolumen bestimmt. Eine Vermittlungsstelle des erfindungsgemäßen Fernmeldewählnetzes kann unter Berücksichtigung des ihr zumutbaren Verkehrsvolumen z.B. ca. 300 000 Teilnehmern Zugang bieten, wogegen die Vermittlungsstellen (Ortsvermittlungsstellen) des derzeit verwendeten Netzes mit individuellen Teilnehmerleitungen wegen der vorstehend erläuterten Reichweitenprobleme und der örtlichen Gegebenheiten etwa 5000 Teilnehmer bedienen.

Das erfindungsgemäße einheitliche Fernmeldewählnetz bietet darüberhinaus dem Teilnehmer den Vorteil, daß er sein Teilnehmerendgerät (wie es beim bekannten mobilen Kommunikationssystem verwendet wird) im Bereich des Fernmeldewählnetzes an jeden beliebigen Ort mitnehmen kann, d.h. er kann das Endgerät als stationäres oder mobiles Telefon verwenden. Hierfür benötigt er nur eine einzige individuelle Kennung, d.h. er besitzt eine einzige Rufnummer, mit der er im Telefonbuch verzeichnet ist. Damit werden durch das Fernmeldewählnetz alle möglichen Arten von Telefonanschlüssen erfaßt, also die persönlichen Telefone im Hause, die mobilen Telefon im Kraftfahrzeug und insbesondere auch sämtliche kommerziellen Telefone. Für die Teilnehmer des erfindungsgemäßen Fernmeldewählnetzes bedeutet dies, daß sie mit nur einer Grundgebühr für ein Telefon die Vorteile sowohl des stationären Netzes als auch mobilen Netzes in Anspruch nehmen können.

Die meisten von einer mobilen Stelle geführten Telefonate führen erfahrungsgemäß in das stationäre Netz. In jedem der beiden Netze entstehen dabei die für das betreffende Netz typischen Gesprächskosten, d.h. der Teilnehmer hat die Summe dieser Kosten zu tragen. Da nun bei dem erfindungsgemäßen Fernmeldewählnetz mobile und stationäre Teilnehmer an die gleichen Vermittlungsstellen angeschlossen sind, werden die Gesprächskosten nur auf das eine einheitliche Netz bezogen, d.h. das Telefonieren wird billiger.

Die Verwendung des Breitbandkabels ermöglicht es in vorteilhafter Weise, auch Kommunikationsdienste der Daten- und Bildübertragung bereitzustellen. Darüberhinaus ist es auch möglich, über diese Breitbandkabel festgeschaltete weitere Nachrichtenkanäle, z.B. Fernseh- und Rundfunkkanäle, zu übertragen. Weiterhin liefert eine Breitbandverkabelung auf der Grundlage von Glasfaserkabel den Vorteil einer großen Frequenzbandreserve, so daß nicht nur eine besonders große Zahl von Kommunikationskanalpaaren bekannter Kommunikationsdienste übertragen werden kann, sondern auch eine Vielzahl weiterer heute noch gar nicht bekannter Kommunikationsdienste, vor allem solche größeren Frequenzbedarfs. Um diese Kommunikationsdienste mit ihren Endgeräten, z.B. Bildwiedergabegeräte, vermittlungstechnisch zu bedienen, können die hierfür am Telefonapparat vorgesehenen Wähleinrichtungen und Funktionstasten verwendet werden, wodurch auch für diese Dienste die Vorteile des erfindungsgemäßen Fernmeldewählnetzes gelten.

Gespräche von mobilen Teilnehmern werden überwiegend mit stationären Teilnehmern geführt, d.h., bei den bestehenden Netzen wird meist von einer Vermittlungsstelle für mobile Teilnehmer in das stationäre Netz übergegangen. Da nun das stationäre Netz, so weit es bereits ein ISDN-Netz ist, mit einer Bitrate von 64 kb/s arbeitet, wird üblicherweise jedes Gespräch, das aus dem mobilen Netz kommt, bereits an der Vermittlungsstelle des mobilen Teilnehmers auf die Bitrate des ISDN-Netzes, also 64 kb/s umgesetzt. Hierbei ist zu berücksichtigen, daß die für das mobile Netz benötigte Bitrate jedoch nur bei 8 oder 16 kb/s liegt. Unter Zugrundelegung des erfindungsgemäßen Fernmeldewählnetzes wird nun im Falle des Überganges in bestehende Fernmeldewählnetze (die neben dem einheitlichen, erfindungsgemäßen Fernmeldewählnetz weiter existieren werden) folgendermaßen vorgegangen: Es werden die Kommunkationskanäle so gestaltet, daß sie jeweils der Bitrate/Bandbreite entsprechen, die für den zugehörigen Nachrichtenübertragungskanal benötigt wird, wodurch in dem erfindungsgemäßen Fernmeldenetz nur diese Bitrate/Bandbreite für den betreffenden Kommunikationskanal übertragen wird. Diese Bitrate kann beispielsweise bei den erwähnten 8 oder 16 kb/s liegen. Eine Anpassung an eine andere Bitrate/Bandbreite des betreffenden bestehenden Fernmeldewählnetzes wird jeweils nur an Übergängen zu den bestehenden Fernmeldewählnetzen vorgenommen.

Derartige Übergänge sind im erfindungsgemäßen Fernmeldewählnetz in wesentlich geringerer Zahl notwendig, als im bekannten mobilen Kommunikationssystem Teilnehmerzugänge zu den Vermittlungsstellen vorhanden sind, so daß sich durch die vorstehend beschriebene Maßnahme eine wesentliche Reduzierung der Organe für diese Anpassung, also die oben erwähnten Umkodierungsgeräte, ergibt. Abgesehen davon ergibt sich in dem erfindungsgemäßen Fernmeldewählnetz selbst der wesentliche Vorteil, daß in diesem Netz insgesamt nur mit der (relativ geringen) Bitrate gearbeitet werden kann, die für die betreffenden Kommunikationskanäle erforderlich ist, also beispielsweise die erwähnten 8 oder 16 kb/s anstelle der 64 kb/s des ISDN-Netzes. Auf die Bandbreite neben der Bitrate wird darum verwiesen, weil einerseits die Bitrate auch eine entsprechende Bandbreite erfordert und andererseits natürlich auch Kommunikationsdienste denkbar sind, die analog arbeiten.

In der Figur ist ein Ausführungsbeispiel der Erfindung dargestellt.

Die Figur zeigt das Fernmeldewählnetz mit über Funkwege F1 bis F9 angeschlossenen mobilen Teilnehmern MT1 bis MT9 und über Kabelwege K1 und K2 angeschlossenen stationären Teilnehmern STa-STn und STm-STo. Bei diesen stationären Teilnehmern kann es sich auch um Bild- und Datenendgeräte handeln. Im Bereich der Funkwege sind bei dem hier dargestellten Ausführungsbeispiel drei Funkbasisstationen BSF1 bis BSF3 dargestellt, die in der bei einem mobilen Kommunikationssystem bekannten Weise die in einem räumlich abgegrenzten Gebiet sich bewegenden mobilen Teilnehmer mit Funkfrequenzen versorgen, die die Kommunikationskanalpaare bilden. Selbstverständlich können in einem derartigen räumlichen Bereich eine größere Anzahl von Funkbasisstationen vorgesehen werden. Dies hängt einerseits von den räumlichen Gegebenheiten und andererseits von der Verkehrsdichte ab. Die einzelnen Basisstationenen BSF1 bis BSF3 sind über digitale Signalverbindungsleitungen S1 bis S3 mit der Vermittlungsstelle SC verbunden.

Der Anschluß der stationären Teilnehmer STa-STn und STm-STo über die Kabelwege erfolgt durch Anschluß der stationären Teilnehmer STa-STn an das Breitbandkabel K1 und der stationären Teilnehmer STm-STo an das Breitbandkabel K2. Die Breitbandkabel K1 und K2 sind z.B. jeweils in einem Stadtbereich durch das Gebiet dieses Bereichs hindurchgeführt und besitzen wie bei den bekannten Anschlüssen von Fernsehgeräten in jedes einzelne Haus hineinreichende Abzweigungen. Die beiden Kabel K1 und K2 sind an die Basisstationen BSK1 und BSK2 angeschlossen, die wie die Funkbasisstationen BSF1-BSF3 mit der Vermittlungsstelle SC in Verbindung stehen, und zwar über die digitalen Signalverbindungsleitungen S4 und S5.

Die Vermittlungsstelle SC, die wie eine Vermittlungsstelle des bekannten mobilen Kommunikationssystems aufgebaut ist und funktioniert, enthält hier mehrere Koppelfelder jeweils für eine bestimmte Bitrate bzw. Bandbreite, und zwar das Koppelfeld KF1 für die Bitrate 8/16 kb/s, das Koppelfeld KF2 für die Bitrate 64 kb/s, das Koppelfeld KF3 für die Bitrate 2Mb/s und das Koppelfeld KF4 für die Bandbreite 12 MHz. Durch die gestrichelte Linie zwischen den Koppelfeldern KF3 und KF4 soll angedeutet werden, daß die Vermittlungsstelle SC noch weitere Koppelfelder je nach Bedarf enthalten kann. Sämtliche Koppelfelder dieser Vermittlungsstelle SC werden von der gemeinsamen Steuerung GST gesteuert, die in bekannter Weise die jeweils gewünschte Vermittlung von Teilnehmer zu Teilnehmer über das betreffende Koppelfeld steuert.

Die Figur zeigt weiterhin den Anschluß an weitere Vermittlungsstellen SCn des erfindungsgemäßen Fernmeldewählnetzes sowie an andere Fernmneldewählnetze, nämlich ein ISDN bzw. PSTN Netz und ein Datennetz D. Bei dem ISDN/PSTN Netz handelt es sich um ein heute bestehendes übliches Fernsprechwählnetz. Anstelle dessen können auch andere Fernwählnetze treten. Über das Datennetz D verlaufen bekannte Datendienste.

Der Anschluß der weiteren Vermittlungsstellen SCn an die Vermittlungsstelle SC erfolgt über die digitalen Signalverbindungsleitungen S6, S7, S8 und S9, über die das jeweils in der Vermittlungsselle SC verwendete Koppelfeld KF1/KF2/KF3/KF4 an weitere Vermittlungsstellen SCn angeschlossen wird. Hierdurch kann in bekannter Weise ein Verbindungsaufbau über mehrere Vermittlungsstellen SC/SCn erfolgen, wie diese überlicher Weise in einem Land zur Versorgung der Teilnehmer vorgesehen sind. Der Netzübergang in ein ISDN/PSTN-Netz bzw. in ein Datennetz D erfolgt in entsprechender Weise über die digitalen Signalverbindungsleitungen S10, S11, S12 und S13, wobei gegebenfalls (z.B. Änderung der Bitrate) in die Netzübergänge vor den ISDN/PSTN-Netzen bzw. Datennetzen D Umkodierungsgeräte U1 bis U4 eingefügt sind.

Ein Verbindungsaufbau in dem dargestellten einheitlichen Fernmeldewählnetz spielt sich nach den Prinzipien und auf die gleiche Weise ab, wie dies in einem bekannten mobilen Kommunikationssystem geschieht. Dabei erhält ein sich meldender Teilnehmer, unabhängig davon, ob es ein mobiler Teilnehmer MT1-MT9 oder ein stationärer Teilnehmer STa-STo ist, von der Vermittlungsstelle SC ein Kommunkationskanalpaar zugeordnet, das als Frequenzband entweder von einer der Funkbasisstationen BFS1-BFS3 als Funksignal ausgestrahlt oder über die Kabelbasisstationen BSK1 und BSK2 auf das Kabel K1 oder K2 übertragen wird. Da wie bei dem bekannten mobilen Kommunikationssystem jeder gesprächsbereite Teilnehmer in der Vermittlungsstelle SC mit seiner Kennung und seiner lokalen Lage festgehalten ist, kann die Vermittlungsstelle SC den jeweils gewünschten Teilnehmer in bekannter Weise ermitteln und über das betreffende Koppelfeld KF1-KF4 die Kommunikationskanalpaare dem rufenden und gerufenen Teilnehmer zur Verfügung stellen, sofern die Verbindung im Bereich einer Vermittlungsstelle SC verbleibt. Andernfalls erfolgt im Koppelfeld KF1-KF4 die Durchschaltung eines Kommunikationskanalpaares zu einer digitalen Signalverbindungsleitung, die zu einer anderen Vermittlungsstelle gegebenenfalls eines anderen Netzes führt. Die Herstellung der Verbindung durch Zuordnung der zur Verfügung gestellten Kommunikationskanalpaare zu den Teilnehmern erfolgt dann in bekannter Weise durch eine Identifizierung beider Teilnehmer aufgrund von deren Kennung.

Wie oben bereits erwähnt, enthält die Vermittlungsstelle SC mehrere Koppelfelder, nämlich die Koppelfelder KF1-KF4, von denen jedes Koppelfeld für eine bestimmte Bitrate bzw. Frequenzbereich zuständig ist. Dabei ist das Koppelfeld KF1 mit der Bitrate 8/16 kb/s vorzugsweise für den Bereich der mobilen Teilnehmer MT1-MT9 vorgesehen, wobei allerdings die zu diesem Bereich gehörenden Basisstationenen BSF1-BSF3 gegegebenenfalls über die gestrichelt gezeichneten digitalen Signalverbindungsleitungen S14, S15 und S16 auch mit dem Koppelfeld KF2 für eine Bitrate von 64 kb/s in Verbindung stehen. Die für den Kabelbereich zuständigen Basisstationen BSK1 und BSK2 haben neben ihrem Zugang zum Koppelfeld KF1 über die digitalen Signalverbindungsleitungen S4 und S5 auch Zugang zu den Koppelfeldern KF2, KF3 und KF4, nämlich über die Signalverbindungsleitungen S17, S18 und S 19 sowie S20, S21 und S22. Über die zum stationären Bereich gehörenden Basisstationen BSK1 und BSK2 können somit auch Verbindungen für Kommunikationsdienste hergestellt werden, die eine besonders hohe Bitrate/Bandbreite erfordern. Dies ist dadurch gegeben, daß über die Breitbandkabel K1 und K2, die vorzugsweise Glasfaserkabel sein können, ein besonders breites Frequenzspektrum übertragen werden kann.

Schließlich sei noch darauf verwiesen, daß an die Basisstationen zu BSK1 und BSK2 Sonderdienste angeschlossen sind, nämlich die festgeschalteten Rundfunkkanäle RK und die Fernsehkanäle FK, die ihre Nachrichteninhalte über die beiden Basisstationen BSK1 und BSK2 in die Kabel K1 und K2 einspeisen, von wo die betreffenden Nachrichten dann in bekannter Weise zu den Teilnehmern gelangen.

## Patentansprüche

1. Schaltungsanordnung für Fernmeldewählnetze, vorzugsweise Fernsprechwählnetze, mit mindestens einer Vermittlungsstelle (SC), zu der mobile Teilnehmer (MT1-MT9) über Funkwege (F1-F9) und stationäre Teilnehmer (STa-STo) über Kabelwege (K1, K2) Zugang haben und sowohl den mobilen als auch den stationären Teilnehmern (MT1-MT9; STa-STo) jeweils eine individuelle Kennung zugeordnet ist, mit der sich der Teilnehmer meldet (Kennungssignal) und damit von der Vermittlungsstelle (SC) identifiziert und lokalisiert wird, wonach im Falle eines Verbindungswunsches von der Vermittlungsstelle (SC) dem Teilnehmer (MT1-MT9) für die Herstellung einer Verbindung vom Teilnehmer zur Vermittlungsstelle (SC) bzw. umgekehrt ein Kommunikationskanalpaar zugeordnet wird, wobei die Zugänge der stationären Teilnehmer (STa-STo) über direkt zu den Teilnehmern reichende Breitbandkabel (K1, K2), vorzugsweise Glasfaserkabel, verlaufen, die von der Vermittlungsstelle (SC) bis zu den stationären Teilnehmerendgeräten (STa-STo) ohne Vermittlungsfunktion und ohne Zwischenschaltung von teilnehmerindividuellen Drahtleitungen reichen und über die die gleiche Signalisierung (Kennungssignal), Kanalzuordnung (Kommunikationskanalpaar) und Nachrichtenübertragung wie zwischen der Vermittlungsstelle (SC) und den an sie angeschlossenen mobilen Teilnehmern (MT1-MT9) derart erfolgt, daß jeder Teilnehmer, unabhängig davon ob mobil oder stationär, von der Vermittlungsstelle (SC) funktionell in gleicher Weise über ein Kommunikationskanalpaar erreicht wird, wobei für die Erreichbarkeit sämtlicher Teilnehmer nur so viele Kommunikationskanalpaare vorgesehen sind, wie es das im jeweiligen Bereich zu erwartende Verkehrsaufkommen erfordert.

2. Schaltungsanordnung nach Anspruch 1, **dadurch gekennzeichnet**, daß die von der Vermittlungsstelle (SC) insbesondere zu den stationären Teilnehmern (STa-STo) übertragenen Nachrichten durch Kommunikationsdienste der Daten- und Bildübertragung gebildet sind.

3. Schaltungsanordnung nach Anspruch 1 oder 2, **dadurch gekennzeichnet**, daß über die Breitbandkabel (K1,K2) festgeschaltete weitere Nachrichtenkanäle, z.B. Fernseh- und Runkfunkkanäle (FK, RK), übertragen werden.

4. Schaltungsanordnung nach einem der Ansprüche 1 bis 3, bei der ein Übergang in bestehende Fernmeldewählnetze erfolgt, **dadurch gekennzeichnet**, daß die Kommunikationskanäle jeweils der Bitrate/Bandbreite entsprechen, die für den zugehörigen Nachrichtenübertragungskanal benötigt wird, wodurch in dem Fernmeldenetz nur diese Bitrate/Bandbreite für den betreffenden Kommunikationskanal übertragen wird, und eine Anpassung an eine andere Bitrate/Bandbreite jeweils nur an Übergängen zu bestehenden Fernmeldewählnetzen durch Umkodierungsgeräte (U1-U4) erfolgt.

## Claims

1. Circuit arrangement for dialled telecommunications networks, preferably dialled telephone networks, having at least one exchange (SC) to which mobile subscribers (MT1-MT9) have access via radio paths (F1-F9) and to which stationary subscribers (STa-STo) have access via cable paths (K1, K2), and an individual tag is in each case allocated to both mobile and stationary subscribers (MT1-MT9; STa-STo), by means of which tag the subscriber reports (tag signal) and is thus identified and localized by the exchange (SC) after which, in the event of a desire to make a connection from the exchange (SC), a communications channel pair is allocated to the subscriber (MT1-MT9) for producing a connection from the subscriber to the exchange (SC) or vice versa, the accesses of the stationary subscribers (STa-STo) running via broadband cables (K1, K2), preferably glass-fibre cables, which extend directly to the subscribers and extend from the exchange (SC) as far as the stationary subscriber terminals (STa-STo) without any switching function and without the intermediate connection of subscriber-specific wire lines, and via which the same signalling (tag signal), channel allocation (communications channel pair) and information transmission takes place as between the exchange (SC) and the mobile subscribers (MT1-MT9) connected to it, in such a manner that every subscriber is accessed from the exchange (SC) functionally in the same manner via a communications channel pair, irrespective of whether said subscriber is mobile or stationary, the number of communications channel pairs being provided for accessibility to all the subscribers being limited to that which is required for the traffic level to be expected in the respective region.

2. Circuit arrangement according to Claim 1, characterized in that the information transmitted from the exchange (SC) in particular to the stationary subscribers (STa-STo) is formed by communications services for data transmission and video transmission.

3. Circuit arrangement according to Claim 1 or 2, characterized in that further, hard-wired information channels, for example television and broadcast radio channels (FK, RK) are transmitted via the broadband cables (K1, K2).

4. Circuit arrangement according to one of Claims 1 to 3, in the case of which an interface into existing dialled telecommunications networks is effected, characterized in that the communications channels in each case correspond to the bit rate/bandwidth which is required for the associated information transmission channel, as a result of which only this bit rate/bandwidth is transmitted for the relevant communications channel in the telecommunications network, and matching to a different bit rate/bandwidth takes place in each case only at interfaces to existing dialled telecommunications networks, by means of recoding apparatuses (U1-U4).

## Revendications

1. Circuit pour réseaux de télécommunications téléphoniques automatiques, de préférence pour réseaux de télécommunications téléphoniques automatiques vocaux, comportant au moins une centrale (SC) à laquelle des correspondants mobiles (MT1 à MT9) ont accès par des lignes radio (F1 à F9), de même que des correspondants stationnaires (Sta à Sto) par des lignes câblées (K1, K2) et dans lequel les correspondants aussi bien mobiles (MT1 à MT9) que stationnaires (Sta à Sto) reçoivent chacun un numéro d'identification par lequel le correspondant se manifeste (signal d'identification) et ainsi est identifié et localisé par la centrale (SC), selon lequel, dans le cas où l'on désire établir une liaison, une paire de canaux de communication est attribuée au correspondant (MT1 à MT9) par la centrale (SC) afin d'établir une liaison du correspondant à la centrale (SC) ou inversement, les accès des correspondants stationnaires (Sta à Sto) s'opérant par des canaux (K1, K2) à large bande, de préférence par des câbles de fibres de verre, reliant directement aux correspondants, qui relient la centrale (SC) jusqu'aux terminaux stationnaires des correspondants (Sta à Sto) sans fonction de transmission et sans connexion intermédiaire de lignes câblées individuelles pour chaque correspondant, et grâces auxquels la signalisation (signal d'identitication), l'attribution de canaux (paire de canaux de communication) et la transmission des informations, comme entre la centrale (SC) et les correspondants mobiles (MT1 à MT9) raccordés à celle-ci, s'opère de manière telle que la centrale (SC) joint chaque correspondant, qu'il soit mobile ou stationnaire, de la même manière, au moyen d'une paire de canaux de communication, sachant que l'on prévoit un nombre de paires de canaux de communication devant permettre d'atteindre l'ensemble des correspondants, uniquement en fonction des nécessités du volume des communications prévisible dans le secteur considéré.

2. Circuit selon la revendication 1, caractérisé en ce que les informations transmises par la centrale (SC), en particulier aux correspondants stationnaires (Sta à Sto), sont constituées par des services de communication de transmission de données et d'images.

3. Circuit selon l'une quelconque des revendications 1 ou 2, caractérisé en ce que les canaux (K1, K2) à large bande transmettent d'autres canaux d'information, poste à poste, par exemple des canaux de télévision et de radio (FK, RK).

4. Circuit selon l'une quelconque des revendications 1 à 3, dans lequel le passage aux réseaux de télécommunications téléphoniques automatiques s'opère, caractérisé en ce que les canaux de communication correspondent chaque fois au débit binaire/à la largeur de bande, requis(e) pour le canal de transmission d'informations correspondant, par lequel dans le réseau de telécommunication seul ce débit binaire/cette largeur de bande est transmis(e) pour le canal de communication considéré, et en ce qu'une adaptation à un autre débit binaire/une autre largeur de bande ne s'opère qu'aux passages à des réseaux de télécommunications téléphoniques automatiques par des appareils transcodeurs (U1 à U4).
